# EUROPÄISCHE PATENTSCHRIFT

(11) **EP 0 609 406 B1**
(45) Veröffentlichungstag und Bekanntmachung des Hinweises auf die Patenterteilung: **09.09.1998**
(21) Anmeldenummer: 93912940.9
(22) Anmeldetag: 09.06.1993
(51) Int. Cl.: F16K 3/18

(54) **ABSPERRSCHIEBER**
SHUT-OFF VALVE
VANNE D'ARRET

(30) Priorität: 22.07.1992 DE 4224247
(43) Veröffentlichungstag der Anmeldung: 10.08.1994
(73) Patentinhaber: Zimmermann & Jansen GmbH, D-52355 Düren (DE)
(72) Erfinder: SCHMITZ, Christian, D-5160 Düren (DE); ZOSEL, Dietrich, Gerhard, D-5160 Düren (DE)
(74) Vertreter: Popp, Eugen, Dr.
(86) Internationale Anmeldenummer: EP9301469
(87) Internationale Veröffentlichungsnummer: WO9402764

(56) Entgegenhaltungen:
- WO-A-92/16779
- DE-A- 1 946 581

## Beschreibung

Die Erfindung betrifft einen Absperrschieber gemäß dem Oberbegriff des Anspruches 1.

Derartige Absperrschieber mit spreizbaren Plattenteilen als Absperrorgan sind nach dem Stand der Technik in verschiedenen Ausführungsformen bekannt, z. B. aus der DE-A-19 46 581. Der dort beschriebene Absperrschieber hat als Absperrorgan für Medien hoher Verschmutzungsgrade und mit hohen Staubanteilen Eingang in die Praxis gefunden. Zum Anpressen und Lösen der Plattenteile werden Zylinder verwendet, in denen Anpreßfedern und hydraulische Lüftelemente kombiniert wirken. Zur Anwendung der bekannten Konstruktion bei Brillenschiebern wird auf das Prospektblatt Nr. 103 "Brillenschieber II", I/85, der Zimmermann & Jansen GmbH, Düren, verwiesen.

Es hat sich nun gezeigt, daß nach längerer Gebrauchsdauer Leckagen an der Hydraulik für die Lüftelemente auftreten können, die zur Folge haben, daß die Plattenteile nicht mehr von den ortsfesten Dichtsitzen abgehoben und in ihre andere Betriebsstellung geschoben werden können. Dabei ist zu bedenken, daß die Plattenteile in der Regel sehr lange in ihrer vorbestimmten Stellung bleiben. Dadurch backen sie mit ihren Dichtungen an den ortsfesten Dichtsitzen regelrecht an. Dementsprechend ist bei dieser Situation ein erhöhter Druck zum Abheben bzw. Lüften der Plattenteile erforderlich. Sind dann Leckagen vorhanden, kann der erforderliche Lüftdruck nicht mehr erreicht werden.

Um dieses Problem zu reduzieren, wurde bereits vorgeschlagen, die Lüftelemente über den Umfang abwechselnd mit je einem gesonderten, also insgesamt zwei unabhängig voneinander wirksamen Hydraulikkreisen zu verbinden. Der Vorteil dieses Systems ist, daß bei Ausfall eines Hydraulikkreises die Funktion der Armatur durch den verbleibenden Hydraulikkreis grundsätzlich gewährleistet ist. Nachteilig ist jedoch, daß beide Hydraulikkreise für die Ausfallsituation ausgelegt bzw. dimensioniert werden müssen. Jeder einzelne Hydraulikkreis muß in der Lage sein, sowohl die Anpreßfedern der von ihm unmittelbar angesteuerten Lüftelemente als auch die Anpreßfedern der ausgefallenen Lüftelemente zusammenzudrücken, um Plattenteile von den ortsfesten Dichtsitzen abzuheben. Bei großen Differenzdrücken hat dies eine hohe Anzahl von Lüftelementen zur Folge. Gegenüber dem reinen Einkreissystem mit nur einem einzigen Hydraulikkreis ist bei der letztgenannten Version mit zwei unabhängigen Hydraulikkreisen die mehr als doppelte Anzahl an hydraulischen Lüftelementen (Kolben-Zylinder-Einheiten) erforderlich.

Der vorliegenden Erfindung liegt nun die Aufgabe zugrunde, einen Absperrschieber der hier fraglichen Art zu schaffen, der bezüglich der Anordnung zum Lüften der Plattenteile die Vorteile des reinen Einkreissystems mit nur einem einzigen Druckmittelkreis mit den Vorteilen des beschriebenen Zweikreissystems mit zwei unabhängig voneinander wirkenden Druckmittelkreisen verbindet, um ein sicheres Lüften der Plattenteile bei minimalem Konstruktionsaufwand zu gewährleisten.

Diese Aufgabe wird erfindungsgemäß durch die kennzeichnenden Maßnahmen des Anspruches 1 gelöst.

Dementsprechend zeichnet sich die vorliegende Erfindung dadurch aus, daß jedem einzelnen Lüftelement zwei unabhängig voneinander wirksame Druckmittelkreise zugeordnet sind, derart, daß bei Ausfall des einen Druckmittelkreises der andere Druckmittelkreis voll wirksam ist. Jedes Lüftelement verfügt also über einen "Reserve-Druckmittelkreis", welcher bei Ausfall des "Normalkreises" diesen voll wirksam ersetzt. Dementsprechend handelt es sich bei der erfindungsgemäßen Konstruktion um ein System, welches die Vorzüge des eingangs beschriebenen Einkreissystems, nämlich die relativ geringe Anzahl von Lüftelementen mit erhöhter Öffnungskraft, und die des beschriebenen Zweikreissystems, nämlich die erhöhte Ausfallsicherheit, vereinigt.

Dadurch, daß nach der Erfindung jedes Lüftelement sowohl mit einem Normal-Druckmittelkreis als auch mit einem Reserve-Druckmittelkreis verbunden ist, ist es bei Ausfall des Normal-Druckmittelkreises nicht mehr erforderlich, daß durch den Reserve-Druckmittelkreis inaktive Lüftelemente gegen die Wirkung der diesen zugeordneten Anpreßfedern "mitgeschleppt" werden müssen. Dies ist auch der Grund dafür, daß bei dem bekanten Zweikreissystem eine erhöhte Anzahl von Lüftelementen mit entsprechend schwächer dimensionierten Anpreßfedern erforderlich ist.

Ein weiterer Vorteil des erfindungsgemäßen Systems ist, daß dieses ohne weiteres bei vorhandenen Absperrschiebern, insbesondere auch Brillenschiebern, nachrüstbar ist. Die erfindungsgemäßen "Zweikreis-Lüftelemente" können mit im Vergleich zu den bekannten "Einkreis-Lüftelementen" gleicher Baugröße, insbesondere Baulänge, hergestellt werden.

Das Grundprinzip der vorliegenden Erfindung liegt also darin, daß an jedem Lüftelement zwei unabhängige Druckmittelkreise anliegen, so daß bei Ausfall des einen Druckmittelkreises der andere Druckmittelkreis voll wirksam ist.

Bevorzugte konstruktive Ausführungsformen dieses Systems sind in den Unteransprüchen beschrieben, wobei darauf hingewiesen wird, daß sich die erfindungsgemäße Konstruktion ganz besonders für Brillenschieber eignet. Die erfindungsgemäßen "Zweikreis-Lüftelemente" sind dann zwischen den Dichtringen sowohl des Abschlußteils als auch des Offenteils der Schieberbrille gleichmäßig verteilt angeordnet.

Schließlich sei auch noch erwähnt, daß das erfindungsgemäße Prinzip nach Anspruch 1 und 2 durch drei Konstruktionsprinzipien verwirklicht werden kann. Das erste ist in Anspruch 3, das zweite ist in den Ansprüchen 4-8, und das dritte ist in Anspruch 9 beschrieben. Da das zweite anhand der beigefügten Zeichnungen noch näher erläutert wird, sei an dieser Stelle auf das erste Konstruktionsprinzip gesondert hingewiesen, welches dadurch gekennzeichnet ist, daß in die Ringkammer des Lüftelements gemäß dem Anspruch 2 zwei jeweils mit einem gesonderten Druckmittelkreis verbundene Druckmittelleitungen münden, die jeweils unmittelbar vor der Mündung ein Rückschlagventil aufweisen, welches ein Entweichen von Druckmittel aus der Ringkammer durch die Hydraulikleitung hindurch verhindert. Ferner mündet eine weitere bzw. dritte Druckmittelleitung in die vorgenannte Ringkammer. Durch diese hindurch ist bedarfsweise Druckmittel aus der Ringkammer entfernbar, und zwar unter der Wirkung der zugeordneten Anpreß- bzw. Spreizfeder. Tritt an einem Hydraulikkreis eine Leckage auf, ist der andere Hydraulikkreis voll wirksam, wobei durch das Rückschlagventil, welches in der dem einen Hydraulikkreis zugeordneten Druckmittelleitung angeordnet ist, verhindert wird, daß das durch die andere Druckmittelleitung in die Ringkammer eingeleitete Druckmittel aus der Ringkammer in den einen Hydraulikkreis wieder entweicht. Die dritte Druckmittelleitung wird nur dann geöffnet, wenn der Lüftvorgang der Plattenteile beendet ist, so daß die Anpreß- bzw. Spreizfedern wieder wirksam werden.

Falls eine dritte Druckmittelleitung vermieden werden soll, müssen (gemäß dem dritten Konstruktionsprinzip) die beiden anderen Druckmittelleitungen statt der beschriebenen Rückschlagventile manuell oder motorisch steuerbare Umschaltventile aufweisen, um die Beaufschlagung der Ringkammer jedes Lüftelementes über den Normal- oder Reserve-Druckmittelkreis steuern zu können.

Ausführungsformen nach der Erfindung werden nunmehr anhand der beigefügten Zeichnungen näher erläutert. Diese zeigen in:
- Fig. 1: ein Zweikreis-Lüftelement gemäß Erfindung mit integrierter Anpreß- bzw. Spreizfeder im Längsschnitt;
- Fig. 2: die obere Hälfte des Lüftelements gemäß Fig. 1 in Spreizstellung, wobei der Normal-Druckmittelkreis wirksam ist;
- Fig. 3: das Lüftelement entsprechend Fig. 2 unter Anlage des Normal-Druckmittelkreises in Lüftstellung;
- Fig. 4: die obere Hälfte des Lüftelements gemäß Fig. 1 in Spreizstellung, wobei der Reserve-Druckmittelkreis anliegt;
- Fig. 5: das Lüftelement gemäß Fig. 4 unter Anlage des Reserve-Druckmittelkreises in Lüftstellung;
- Fig. 6: eine alternative Ausführungsform eines Zweikreis-Lüftelements im schematischen Längsschnitt; und
- Fig. 7: eine weitere Alternative eines Zweikreis-Lüftelements im schematischen Längsschnitt.

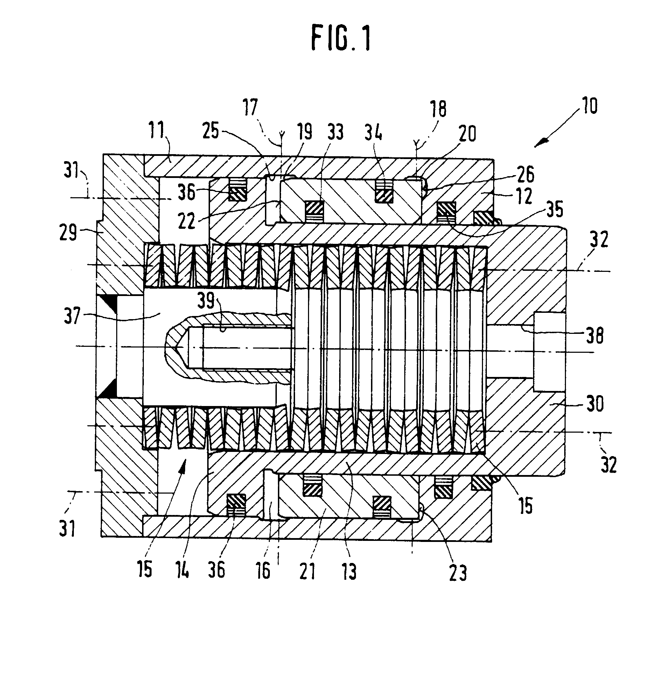

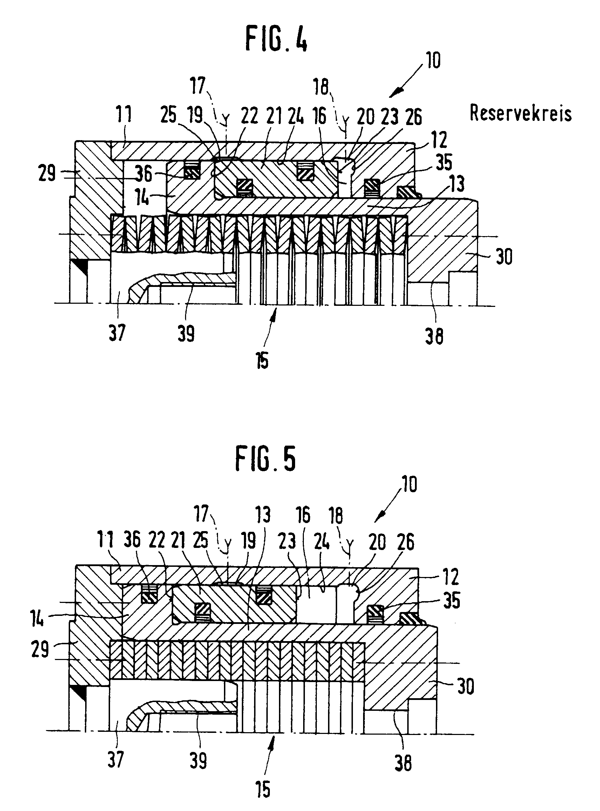

In Fig. 1 ist ein hydraulisches Lüftelement 10 im Längsschnitt dargestellt. Dieses Lüftelement umfaßt einen in an sich bekannter Weise am nicht dargestellten Ansatz des einen Plattenteiles des nicht näher dargestellten Absperrschiebers befestigten äußeren Zylinder 11 mit am freien Ende inneren Ringbund 12, einen am ebenfalls nicht dargestellten Ansatz des anderen bzw. gegenüberliegenden Plattenteiles befestigten und als Spreizkolben wirkenden inneren Zylinder 13 mit am freien Ende äußeren Ringbund 14 und eine zwischen äußerem und innerem Zylinder in Axialrichtung derselben wirksame Anpreß- bzw. Spreizfeder in Form eines Tellerfedernpaketes 15. Der innere Zylinder 13 ist unter Ausbildung einer gegenüber der Umgebung abgedichteten Ringkammer 16 zwischen äußerem und innerem Zylinder sowie den beiden Ringbunden 12 und 14 relativ zum äußeren Zylinder 11 verschiebbar, und zwar unter Einleitung von Druckmittel in die Ringkammer 16 gegen die Wirkung des Tellerfedernpaketes 15 teleskopartig in den äußeren Zylinder 11 hinein. In die Ringkammer 16 münden zwei Druckmittelleitungen 17 und 18, wobei die Druckmittelleitung 17 mit einem sog. Normal-Druckmittelkreis und die Druckmittelleitung 18 mit einem sog. Reserve-Druckmittelkreis in Verbindung steht. Die Druckmittelöffnungen 19, 20 der beiden Druckmittelleitungen 17, 18 innerhalb der Ringkammer 16 sind axial voneinander beabstandet. Zwischen den beiden Druckmittelöffnungen 19, 20 ist innerhalb der Ringkammer 16 ein Ringkolben 21 axial verschiebbar vorgesehen. Die eine Stirnfläche 22 des Ringkolbens 21 ist über die Druckmittelleitung 17 und Druckmittelöffnung 19 druckmittelbeaufschlagbar, während die gegenüberliegende Stirnfläche 23 über die dieser zugeordnete andere Druckmittelöffnung 20 für Druckmittel zugänglich ist. Im Normalbetrieb ist die in die andere Druckmittelöffnung 20 mündende Druckmittelleitung im wesentlichen drucklos bzw. durch ein Sperrorgan, insbesondere einen Kugelhahn, vom zugeordneten Druckmittelaggregat getrennt. Auf diese Weise verbleibt im Normalbetrieb der Ringkolben 21 bei Druckmittelbeaufschlagung über die Druckmittelöffnung 19 in seiner in den Fig. 1 - 3 dargestellten Normal-Endstellung unter entsprechender axialer Ineinanderbewegung von äußerem und innerem Zylinder. Tritt in dem der einen Druckmittelöffnung 19 zugeordneten Normalbetrieb-Druckmittelkreis eine Leckage auf, wird die entsprechende Normal-Druckmittelleitung 17 geschlossen und die der Reserve-Druckmittelöffnung 20 zugeordnete Reserve-Druckmittelleitung 18 geöffnet, so daß sich der Ringkolben 21 unter dem Druck an der Reserve-Druckmittelöffnung 20 innerhalb der Ringkammer 16 in die andere, nämlich Reserve-Endstellung entsprechend den Fig. 4 und 5 verschiebt, wodurch dann die beiden Zylinder unter dem über die andere bzw. Reserve-Druckmittelöffnung 20 an der gegenüberliegenden Stirnfläche 23 des Ringkolbens 21 anstehenden Druck ineinanderbewegbar sind entsprechend Fig. 5. Wie die Fig. 1 - 5 sehr gut erkennen lassen, sind an der die Ringkammer 16 begrenzenden Innenseite 24 des äußeren Zylinders 11 zwei im axialen Abstand voneinander angeordnete Ausnehmungen 25 und 26 vorgesehen, in die jeweils eine der beiden Druckmittelleitungen 17, 18 mündet (Öffnung 19 bzw. 20), wobei die beiden Ausnehmungen 25 und 26 in der einen bzw. Normal-Endstellung des Ringkolbens 21, d.h. bei der dargestellten Ausführungsform entsprechend den Fig. 1 bis 3 bei Anlage desselben am inneren Ringbund 12 des äußeren Zylinders 11, sich jeweils über beide zugeordnete Kanten 27, 28 des Ringkolbens 21 erstrecken. Dabei ist die eine Ausnehmung 26 im Eckbereich zwischen innerem Ringbund 12 und der sich daran anschließenden zylindrischen Innenseite 24 des äußeren Zylinders 11 derart ausgebildet, daß sie sich über einen Teil der dem inneren Ringbund 12 des äußeren Zylinders 11 zugewandten Stirnfläche 23 des Ringkolbens 21 erstreckt. Damit sind beide Stirnflächen des Ringkolbens 21 mit Druckmittel beaufschlagbar, und zwar entweder über den "Normalkreis" oder über den "Reservekreis".

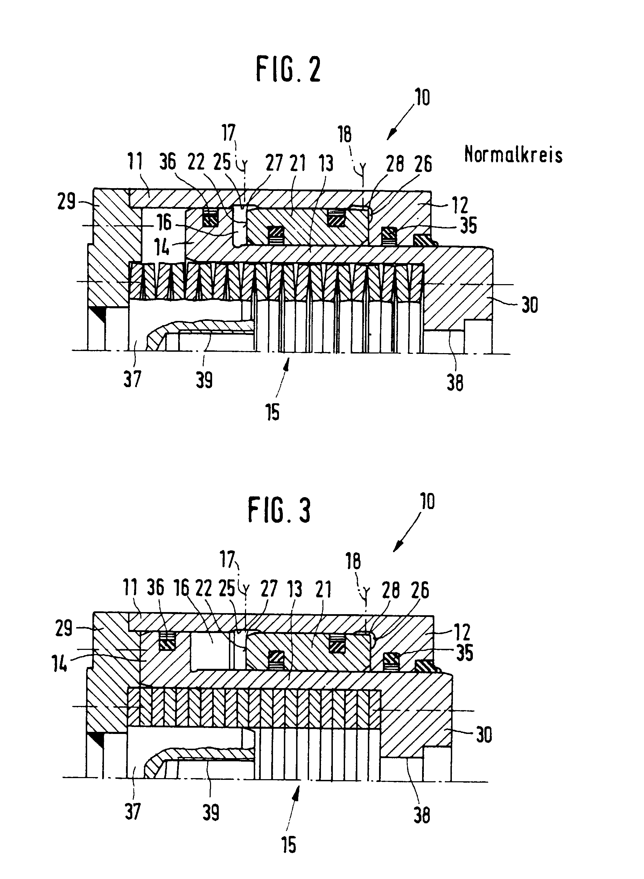

Dementsprechend ist gewährleistet, daß in der Normal-Endstellung des Ringkolbens 21 (siehe Fig. 1 - 3) die der Normal-Druckmittelöffnung 19 zugewandte Stirnfläche 22 des Ringkolbens 21 druckmittelbeaufschlagbar ist, so daß unter entsprechender Druckerhöhung der innere Zylinder 13 aus der Stellung gemäß Fig. 2 in die Stellung gemäß Fig. 3, d.h. in den äußeren Zylinder 11 hineinverschoben wird, und zwar unter entsprechender Zusammendrückung des Tellerfederpaketes 15, welches zwischen äußerem und innerem Zylinder wirksam ist. Im Falle eines Ausfalls des "Normalkreises" wird der Reserve-Druckmittelkreis über die Reserve-Druckmittelleitung 18 und Reserve-Druckmittelöffnung 20 hindurch wirksam, indem die der Reserve-Druckmittelöffnung 20 zugeordnete Stirnfläche 23 des Ringkolbens 21 mit Reserve-Druckmittel beaufschlagt wird. Dadurch wird der Ringkolben 21 innerhalb der Ringkammer 16 entsprechend Fig. 4 nach links verschoben, bis er am äußeren Ringbund 14 des inneren Zylinders 13 anliegt. Unter weiterer Druckerhöhung wird dann entsprechend Fig. 5 der innere Zylinder 13 samt Ringkolben 21 in den äußeren Zylinder 11 hineinbewegt unter entsprechender Zusammendrückung des Tellerfederpaketes 15.

Die vorbeschriebene Ineinanderbewegung von äußerem und innerem Zylinder wird begrenzt durch Anschlag des äußeren Ringbundes 14 des inneren Zylinders am Boden 29 des äußeren Zylinders 11.

Der Boden des inneren Zylinders 13 ist mit der Bezugsziffer 30 gekennzeichnet. Beide Zylinder sind also jeweils nach Art eines Topfes ausgebildet. Bei der dargestellten Ausführungsform ist der innere, als Kolben wirkende Zylinder einschließlich Boden und äußerem Ringbund einstückig ausgebildet, während der äußere Zylinder aus zwei Teilen besteht, nämlich dem Boden 29 einerseits und dem eigentlichen Zylinder 11 samt innerem Ringbund 12 andererseits. Die Befestigung der beiden Zylinder 11 und 13 an den nicht dargestellten Ansätzen erfolgt jeweils über Befestigungsschrauben, die in den Boden 29 des äußeren Zylinders einerseits und den Boden 30 des inneren Zylinders andererseits einschraubbar sind. Die Schraublöcher sind in Fig. 1 mit den Bezugsziffern 31 und 32 angedeutet.

Im übrigen entspricht der axiale Abstand zwischen den beiden Druckmittelöffnungen 19 und 20 in der Ringkammer 16 etwa der Länge des innerhalb derselben verschieblich angeordneten Ringkolbens 21.

Des weiteren ist der Ringkolben 21 gegenüber dem äußeren und inneren Zylinder abgedichtet, und zwar mittels Ringdichtungen 33, 34. Ferner sind zwischen den beiden Ringbunden 12 und 14 einerseits und dem äußeren Zylinder 11 bzw. inneren Zylinder 13 andererseits jeweils eine Ringdichtung 35 bzw. 36 zur Abdichtung der Ringkammer 16 gegenüber der Umgebung angeordnet. Bei den vorgenannten Dichtmitteln handelt es sich um an sich bekannte Konstruktionsmaßnahmen, die keiner weiteren Erläuterung bedürfen. Das bereits mehrfach erwähnte Tellerfederpaket 15 wird durch wechselseitig geschichtete Tellerfedern gebildet. Die Zentrierung des Tellerfederpaketes erfolgt im wesentlichen innerhalb des inneren Zylinders bzw. innerhalb der inneren Zylinderhülse 13. Im Übergangsbereich zwischen innerem und äußerem Zylinder erfolgt die Zentrierung des Tellerfederpaketes durch einen am Boden 29 des äußeren Zylinders 11 angeordneten, nämlich angeschweißten Zentrierbolzen 37.

Durch eine zentrale Bohrung 38 im Boden 30 des inneren Zylinders 13 hindurch ist eine nicht dargestellte Schraube in den Zentrierbolzen 37 (Innengewinde 39) einschraubbar. Diese Schraube dient zur Montage und Nctbetätigung des Lüftelements bei totalem Ausfall der Hydraulikanlage. Da bei dem beschriebenen Lüftelement im Vergleich zu den bekannten Lüftelementen der innere und äußere Ringbund kürzer ausgebildet sind, erhält man eine etwas länger dimensionierte Ringkammer 16, in der der beschriebene Ringkolben 21 einsetzbar und in der beschriebenen Weise wirksam ist. Die Gesamtbaulänge des Lüftelementes muß durch die genannten Maßnahmen nicht vergrößert werden. Dementsprechend eignen sich die beschriebenen Zweikreis-Lüftelemente auch zur Nachrüstung herkömmlicher Absperrschieber, insbesondere Brillenschieber.

Es sei noch darauf hingewiesen, daß statt der oben erwähnten Umschaltung von "Normalkreis"-Betrieb auf "Reservekreis"-Betrieb mittels in den zugeordneten Druckmittelleitungen angeordneten Sperrmitteln, insbesondere Kugelhähnen, auch denkbar ist, mit unterschiedlichen Drücken im Normal- und Reservekreis zu arbeiten dergestalt, daß der Druck im Reservekreis geringer ist als im Normalkreis. Dementsprechend ist im Normalfall der "Normalkreis" wirksam, und gegen die Wirkung der beschriebenen Spreizfeder und gegen den Druck im "Reservekreis". Tritt eine Leckage im "Normalkreis" auf unter entsprechendem Druckabfall bis unter den Druck im "Reservekreis", wird dieser in der beschriebenen Weise wirksam.

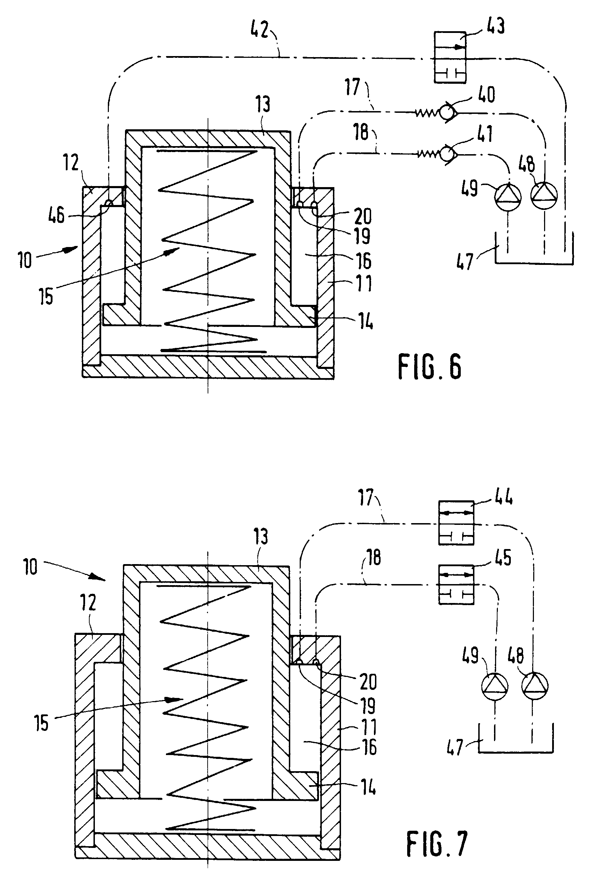

In Fig. 6 ist eine alternative Ausführungsform eines Zweikreis-Lüftelements 10 in schematischem Längsschnitt dargestellt. Diese unterscheidet sich von dem vorbeschriebenen Lüftelement primär dadurch, daß es keinen Ringkolben aufweist. Stattdessen münden sternseitig die Normalkreis-Druckmittelleitung 17, Reservekreis-Druckmittelleitung 18 und eine dritte Leitung 42 in den Ringraum 16, wobei die Druckmittelöffnungen mit den Bezugsziffern 19, 20 und 46 gekennzeichnet sind. Die beiden Druckmittelleitungen 17 und 18 weisen jeweils ein federbelastetes Rückschlagventil 40 bzw. 41 auf, das eine Druckmittel strömung nur in den Ringraum 16 hinein erlaubt, wobei die Druckmittelströmung durch den Druckmittelleitungen 17 und 18 zugeordneten, nämlich zwischen den Rückschlagventilen 40, 41 und einem Tank 47 angeordneten Druckmittelpumpen 48 und 49 bewirkt wird. Soll das Lüftelement nach der "Lüftung" wieder in seine Spreizstellung zurückkehren, wird Druckmittel aus dem Ringraum 16 über die dritte Leitung 42 entfernt. Zu diesem Zweck wird ein in dieser Leitung angeordnetes 2/2-Wegeventil 43 geöffnet, so daß durch dieses hindurch Druckmittel in den Tank 47 zurückströmen kann. Das Ventil 43 ist in Offenstellung nur in Richtung zum Tank 47 durchströmbar. Fällt bei der beschriebenen Ausführungsform der "Normalkreis" über die Leitung 17 aus, wird der "Reservekreis" über die Leitung 18 aktiviert. Im übrigen wird hinsichtlich der Abdichtung des Ringraumes 16 auf die entsprechende Beschreibung der Ausführungsform nach den Fig. 1 - 5 verwiesen.

Die Ausführungsform nach Fig. 7 entspricht im Prinzip derjenigen nach Fig. 6. Sie unterscheidet sich jedoch von dieser dadurch, daß sie keine dritte Druckmittelleitung 42 sowie keine Rückschlagventile 40, 41 in den "Normalkreis"- und "Reservekreis"-Druckmittelleitungen 17 und 18 aufweist. Stattdessen sind in den Leitungen 17 und 18 jeweils 2/2-Wegeventile 44 und 45 angeordnet, die in Offenstellung jeweils in zwei Richtungen durchströmbar sind. Damit sind die beiden Leitungen 17 und 18 jeweils sowohl für die Druckmittelzufuhr in den Ringraum 16 als auch für die Druckmittelentfernung aus dem Ringraum 16 geeignet, und zwar unabhängig voneinander als "Normalkreis"-Leitung bzw. "Reservekreis"-Leitung. Damit über die Leitungen 17, 18 auch Druckmittel in den Tank 47 zurückströmen kann, müssen die Pumpen 48 und 49 natürlich jeweils so ausgebildet sein, daß sie in inaktiver Stellung druckmitteldurchströmbar sind. Dementsprechend kann bei Bedarf unter der Wirkung der Feder 15 Druckmittel aus dem Ringraum 16 durch das geöffnete Ventil 44 oder alternativ durch das geöffnete Ventil 46 und die jeweils zugeordnete Pumpe 48 bzw. 49 hindurch in den Tank 47 gepreßt werden.

## Patentansprüche

1. Absperrschieber, bestehend aus einem mit einem Durchflußkanal versehenen Gehäuse, in welchem zwei in Durchflußrichtung und mit Abstand zueinander angeordnete gehäusefeste Dichtsitze ausgebildet sind, zwischen welche eine Absperrplatte einschiebbar ist, die zwei in Durchflußrichtung mit Abstand zueinander angeordnete, in Durchflußrichtung unter der Wirkung elastischer Elemente (15) gegen die ortsfesten Dichtsitze spreizbare Plattenteile aufweist, wobei das Abheben der Plattenteile von den ortsfesten Dichtsitzen durch druckmittelbetätigte Lüftelemente (10) erfolgt, die zu diesem Zweck gleichmäßig über den Umfang verteilt zwischen randseitigen Ansätzen der beiden Plattenteile angeordnet und wirksam sind,
**dadurch gekennzeichnet**, daß
jedem Lüftelement (10) zwei unabhängig voneinander wirksame Druckmittelkreise (17, 19 bzw. 18, 20) zugeordnet sind, derart, daß bei Ausfall des einen Druckmittelkreises (17, 19) der andere Druckmittelkreis (18, 20) wirksam ist.

2. Absperrschieber nach Anspruch 1, wobei jedes Lüftelement (10) in an sich bekannter Weise einen am Ansatz des einen Plattenteils befestigten äußeren Zylinder (11) mit am freien Ende inneren Ringbund (12), einen am Ansatz des anderen bzw. gegenüberliegenden Plattenteils befestigten inneren Zylinder (13) mit am freien Ende äußeren Ringbund (14) und eine zwischen äußerem und innerem Zylinder in Axialrichtung derselben wirksame Spreizfeder, insbesondere in Form eines Tellerfederpaketes (15), aufweist, wobei der innere Zylinder (13) unter Ausbildung einer gegenüber der Umgebung abgedichteten Ringkammer (16) zwischen äußerem und inneren Zylinder sowie den beiden Ringbunden (12, 14) relativ zum äußeren Zylinder (11) verschiebbar ist, und zwar unter Einleitung von Druckmittel in die Ringkammer (16) gegen die Wirkung der Spreizfeder bzw. des Tellerfederpaketes (15) teleskopartig in den äußeren Zylinder hinein.

3. Absperrschieber nach Anspruch 2, dadurch gekennzeichnet, daß
in die Ringkammer (16) zwei Druckmittelleitungen (17, 18) münden, die jeweils ein Rückschlagventil (40, 41) aufweisen, welches ein Entweichen von Druckmittel aus der Ringkammer (16) durch die Druckmittelleitungen (17, 18) hindurch verhindert, und daß ferner eine dritte Leitung (42) in die Ringkammer (16) mündet, durch die hindurch bedarfsweise Druckmittel aus der Ringkammer (16) wieder entfernbar ist, und zwar nach Öffnung dieser Leitung (2/2-Wegeventil 42), unter der Wirkung der Spreizfeder bzw. des Tellerfederpaketes (15) (Fig. 6).

4. Absperrschieber nach Ansrpuch 2, dadurch gekennzeichnet, daß in die Ringkammer (16) zwei Druckmittelleitungen (17, 18) münden, nämlich eine Normalbetrieb-Druckmittelleitung (17) und eine Reservebetrieb-Druckmittelleitung (18), wobei die jeweils zugeordneten Druckmittelöffnungen (19, 20) axial voneinander beabstandet sind, und daß zwischen den beiden Druckmittelöffnungen (19, 20) ein innerhalb der Ringkammer (16) axial verschiebbarer Ringkolben (21) angeordnet ist, der entweder im Normalbetrieb über die eine Druckmittelöffnung (19) oder im Resrvebetrieb über die andere Druckmittelöffnung (20) druckmittelbeaufschlagbar ist unter entsprechender Anlage an der der jeweils geöffneten Druckmittelöffnung (19 oder 20) gegenüberliegenden stirnseitigen Begrenzung der Ringkammer (16) und unter entsprechender Ineinanderbewegung von äußerem und innerem Zylinder gegen die Wirkung der Spreizfeder bzw. des Tellerfederpaketes (15).

5. Absperrschieber nach Anspruch 4, dadurch gekennzeichnet, daß an der die Ringkammer (16) begrenzenden Innenseite (24) des äußeren Zylinders (11) zwei im axialen Abstand voneinander angeordnete Ausnehmungen (25, 26) ausgebildet sind, in die jeweils eine der beiden Druckmittelleitungen (17, 18) mündet, wobei die beiden Ausnehmungen (25, 26) in der einen (Normal-)Endstellung des Ringkolbens (21), insbesondere bei Anlage desselben am inneren Ringbund (12) des äußeren Zylinders (11), sich jeweils über beide Seiten der zugeordneten äußeren Kante (27, 28) des Ringkolbens (21) hinwegerstrecken.

6. Absperrschieber nach Anspruch 5, dadurch gekennzeichnet, daß die eine Ausnehmung (26) im Eckbereich zwischen innerem Ringbund (12) und der sich daran anschließenden zylindrischen Innenseite (24) des äußeren Zylinders (11) ausgebildet ist, derart, daß sie sich über einen Teil der dem inneren Ringbund (12) des äußeren Zylinders (11) zugewandten Stirnfläche (23) des Ringkolbens (21) erstreckt.

7. Absperrschieber nach Anspruch 5 oder 6, dadurch gekennzeichnet, daß der axiale Abstand zwischen den beiden Druckmittelöffnungen (19, 20) in der Ringkammer (16) etwa der Länge des innerhalb derselben verschieblich angeordneten Ringkolbens (21) entspricht.

8. Absperrschieber nach einem der Ansprüche 4 bis 7, dadurch gekennzeichnet, daß der Ringkolben (21) gegenüber dem äußeren (11) und inneren (13) Zylinder abgedichtet ist (Ringdichtungen 33, 34), und daß ferner zwischen den beiden Ringbunden (12, 14) einerseits und dem äußeren (11) bzw. inneren (13) Zylinder andererseits jeweils eine Ringdichtung (35, 36) zur Abdichtung der Ringkammer (16) gegenüber der Umgebung angeordnet ist.

9. Absperrschieber nach Anspruch 2, dadurch gekennzeichnet, daß in die Ringkammer (16) zwei Druckmittelleitungen (17, 18) münden, die jeweils ein 2/2-Wegeventil (44, 45) aufweistn, wobei die 2/2-Wegeventile (44, 45) in Offenstellung jeweils in zwei Richtungen durchströmbar sind, so daβ bedarfsweise durch die eine oder beide Druckmittelleitungen hindurch Druckmittel aus der Ringkammer (16) wieder entfernbar ist, und zwar unter der Wirkung der Spreizfeder bzw. des Tellerfederpaketes (15) (Fig. 7).

10. Anwendung der Konstruktion nach einem der Ansprüche 1 bis 9 sowohl bei der Offenscheibe als auch der Blindscheibe eines Brillenschiebers.

## Claims

1. Shut-off valve, comprising a housing which is provided with a throughflow channel, in which are placed two sealing seats fitted on the housing and arranged in the throughflow direction and with a space between them, between which a valve plate can be inserted which comprises two plate elements which are arranged so as to be placed at a distance from each other in the throughflow direction and spreadable in the throughflow direction against spatially fixed sealing seats under the effect of elastic elements (15), and lifting off the plate sections from the spatially fixed sealing seats is carried out by pressure-medium actuated ventilating elements (10) which are for this purpose peripherally evenly spaced between extensions on the edges of both plate elements and operative, **characterised in that** each ventilating element (10) is associated with two pressure-medium circuits (17, 19 or 18, 20) which are active independently from each other in such a manner that in the event of failure of one pressure-medium circuit (17, 19) the other pressure-medium circuit (18, 20) is actuated.

2. Shut-off valve according to Claim 1, and each ventilating element (10) comprises an external cylinder (11), which is in a conventional manner mounted on the extension of the one plate section with intemal circular collar (12) at the free end, an inner cylinder (13), which is mounted on the extension of the other or oppositely located plate section with external circular collar (14) at the free end, and a spreading spring, which is operative between the outer and the inner cylinder in the axial direction of the latters, in particular in the form of a cup-spring packet (15), and the inner cylinder (13) is displaceable relative to the outer cylinder (11) whilst forming a circular chamber (16), which is sealed from the surrounding area between outer and inner cylinder, between the outer and the inner cylinder as well as both circular collars (12, 14), i.e. telescopically into the outer cylinder whilst introducing a pressure medium into the circular chamber (16) against the force of the spreading spring or the cup-spring packet (15).

3. Shut-off valve according to Claim 2, **characterised in that** into the circular chamber (16) merge two pressure-medium pipes (17, 18), each having a non-retum valve (40, 41) which prevents pressure medium from escaping the circular chamber (16) via the pressure-medium pipes (17, 18); furthermore, a third pipe (42) merges into the circular chamber (16) through which pressure medium can be removed from the circular chamber (16) if so required, i.e. after opening this pipe (2/2-way valve 42), under the effect of a spreading spring or a cup-spring packet (15) (Fig. 6).

4. Shut-off valve according to Claim 2, **characterised in that** into the circular chamber (16) merge two pressure-medium pipes (17, 16), i.e. a normal-operation pressure-medium pipe (17) and a reserve-operation pressure-medium pipe (18), and the respectively associated pressure-medium apertures (19, 20) are spaced axially apart from each other, and between both pressure-medium apertures (19, 20) is arranged a circular piston (21) which is axially displaceable within the circular chamber (16) which is pressure-medium loadable either in normal operation via the one pressure-medium aperture (19) or in reserve operation via the other pressure-medium aperture (20) whilst abutting the end surface of the circular chamber (16) positioned opposite the respectively opened pressure-means aperture (19 or 20) and with corresponding movement into each other of outer and inner cylinder against the force of the spreading spring or the cup-spring packet (15).

5. Shut-off valve according to Claim 4, **characterised in that** on the inside (24) of the outer cylinder (11) which defines the circular chamber (16) are arranged two cutouts (25, 26) at an axial distance from each other, into which merges one of the two pressure-medium pipes (17, 18), and both cutouts (25, 26) in the one (normal) end position of the circular piston (21), extend in particular during its abutment against the inner circular collar (12) of the outer cylinder (11), over both sides of the associated outer edge (27, 28) of the circular piston (21).

6. Shut-off valve according to Claim 5, **characterised in that** the one cutout (26) is arranged in the corner area between inner circular collar (12) and the thereto adjacent cylindrical inside (24) of the outer cylinder (11) in such a manner that it extends over a portion of the end surface (23) of the circular piston (21) facing towards the inner circular collar (12) of the outer cylinder (11).

7. Shut-off valve according to Claim 5 or 6, **characterised in that** the axial distance between both pressure-medium apertures (19, 20) in the circular chamber (16) corresponds approximately with the length of the circular piston (21) which is displaceably arranged therein.

8. Shut-off valve according to one of Claims 4 to 7, **characterised in that** the circular piston (21) is sealed from the outer (11) and the inner (13) cylinder (circular seals 33, 34); furthermore, between both circular collars (12, 14) on the one hand and the outer (11) or inner (13) cylinder on the other hand is arranged a respective circular seal (35, 36) for sealing the circular chamber (16) from the environment.

9. Shut-off valve according to Claim 2, **characterised in that** into the circular chamber (16) merge two pressure-medium pipes (17, 18) having a respective 2/2-way valve (44, 45), and the 2/2-way valves (44, 45) can in the open position be flowed through in two directions, so that if required pressure medium can be removed from the circular chamber (16) via one or both pressure-medium pipes, i.e. under the effect of the spreading spring or the cup-spring packet (15) (Fig. 7).

10. Use of the structure according to one of Claims 1 to 9, both with the open disc and the blind disc of a goggle valve.

## Revendications

1. Vanne d'arrêt composée d'un corps muni d'un canal de passage et dans lequel sont réalisés, dans le sens de passage, deux sièges d'étanchéité solidaires du corps, disposés à distance l'un de l'autre, entre lesquels peut être inséré un disque obturateur qui présente deux éléments d'obturation disposés à distance l'un de l'autre dans le sens de passage et pouvant être écartés dans le sens de passage, sous l'effet d'éléments élastiques (15), contre les sièges d'étanchéité stationnaires, le décollement des éléments d'obturation des sièges d'étanchéité stationnaires étant assuré par des éléments de ventilation (10) à commande hydraulique, qui sont à cet effet régulièrement répartis sur le pourtour entre des épaulements côté extrême des deux éléments d'obturation, et agissent entre ces derniers, caractérisée en ce que deux circuits hydrauliques (17, 19 et/ou 18, 20), agissant indépendamment l'un de l'autre, sont associés à chaque élément de ventilation (10) de sorte que, en cas de défaillance de l'un des circuits (17, 19), l'autre circuit hydraulique (18, 20) est actif.

2. Vanne d'arrêt suivant la revendication 1, chaque élément de ventilation (10) présentant, d'une manière connue en soi, un cylindre externe (11) fixé sur l'épaulement de l'un des éléments d'obturation, avec un collet annulaire (12) interne sur l'extrémité libre, un cylindre interne (13) fixé sur l'épaulement de l'autre élément d'obturation et/ou l'élément d'obturation en vis-à-vis, avec un collet annulaire (14) externe sur l'extrémité libre, et un ressort d'écartement entre le cylindre externe et le cylindre interne, agissant dans le sens axial de ces derniers, en forme d'un paquet de ressorts à disques (15) en particulier, le cylindre interne (13) pouvant se déplacer par rapport au cylindre externe (11) en formant un compartiment annulaire (16), étanchéifié par rapport à l'ambiance, entre le cylindre externe et le cylindre interne, ainsi qu'entre les deux collets annulaires (12, 14), et ce d'une manière télescopique dans le cylindre externe, contre l'effet du ressort d'écartement et/ou du paquet de ressorts à disques (15), sous l'effet d'envoi d'agent sous pression dans le compartiment annulaire (16).

3. Vanne d'arrêt suivant la revendication 2, caractérisée en ce que deux conduites hydrauliques (17, 18) débouchent dans le compartiment annulaire (16), ces conduites présentant respectivement une soupape antiretour (40, 41) qui s'oppose à un échappement d'agent sous pression du compartiment annulaire (16) au travers des conduites hydrauliques (17, 18), et en ce qu'une troisième conduite (42) débouche en outre dans le compartiment annulaire (16), conduite au travers de laquelle de l'agent sous pression peut être en cas de besoin de nouveau évacué du compartiment annulaire (16), à savoir après l'ouverture de cette conduite (distributeur 2/2 42), sous l'effet du ressort d'écartement et/ou du paquet de ressorts à disques (15) (figure 6).

4. Vanne d'arrêt suivant la revendication 2, caractérisée en ce que deux conduites hydrauliques (17, 16) débouchent dans le compartiment annulaire (16), à savoir une conduite hydraulique (17) de service normal et une conduite hydraulique (18) de service de réserve, les ouvertures hydrauliques (19, 20) respectivement associées étant distantes l'une de l'autre dans le sens axial, et en ce qu'un piston annulaire (21), mobile dans le sens axial à l'intérieur du compartiment annulaire (16), est disposé entre les deux ouvertures hydrauliques (19, 20), ce piston pouvant être alimenté en agent sous pression par l'une des ouvertures hydrauliques (19) en service normal, ou par l'autre ouverture hydraulique (20) en service de réserve, avec un appui correspondant sur la délimitation côté frontal du compartiment annulaire (16), en vis-à-vis de l'ouverture hydraulique (19 ou 20) respectivement ouverte, et avec un mouvement d'emboîtement correspondant du cylindre externe et du cylindre interne contre l'effet du ressort d'écartement et/ou du paquet de ressorts à disques (15).

5. Vanne d'arrêt suivant la revendication 4, caractérisée en ce que deux évidements (25, 26) distants l'un de l'autre dans le sens axial, dans lesquels débouche respectivement l'une des deux conduites hydrauliques (17, 18), sont réalisés sur le côté interne (24), délimitant le compartiment annulaire (16), du cylindre externe (11), les deux évidements (25, 26) s'étendant respectivement, dans l'une des positions extrêmes (normale) du piston annulaire (21), notamment lorsque ce dernier s'applique sur le collet annulaire interne (12) du cylindre externe (11), sur les deux côtés du rebord externe (27, 26) associé du piston annulaire (21).

6. Vanne d'arrêt suivant la revendication 5, caractérisée en ce que l'un des évidements (26) est réalisé dans la zone angulaire comprise entre le collet annulaire interne (12) et le côté interne cylindrique (24) consécutif du cylindre externe (11), de sorte qu'il s'étend sur une partie de la face frontale (23) du piston annulaire (21), tournée vers le collet annulaire interne (12) du cylindre externe (11).

7. Vanne d'arrêt suivant l'une des revendications 5 et 6, caractérisée en ce que la distance axiale entre les deux ouvertures hydrauliques (19, 20), dans le compartiment annulaire (16), correspond à peu près à la longueur du piston annulaire (21) mobile à l'intérieur de ce dernier.

8. Vanne d'arrêt suivant l'une des revendications 4 à 7, caractérisée en ce que le piston annulaire (21) est rendu étanche par rapport au cylindre externe (11) et au cylindre interne (13) (joints toriques 33, 34), et en ce qu'un joint torique (35, 36) est en outre respectivement disposé entre les deux collets annulaires (12, 14), d'une part, le cylindre externe (11) et/ou interne (13), d'autre part, pour étanchéifier le compartiment annulaire (16) par rapport à l'ambiance.

9. Vanne d'arrêt suivant la revendication 2, caractérisée en ce que deux conduites hydrauliques (17, 18), présentant respectivement un distributeur 2/2 (44, 45), débouchent dans le compartiment annulaire (16), les distributeurs 2/2 (44, 45) pouvant être respectivement balayés dans deux directions en position d'ouverture, de sorte que de l'agent sous pression peut être de nouveau évacué, en cas de besoin, du compartiment annulaire (16) au travers de l'une ou des deux conduites hydrauliques, à savoir sous l'effet du ressort d'écartement et/ou du paquet de ressorts à disques (15) (figure 7).

10. Utilisation de la construction suivant l'une des revendications 1 à 9, aussi bien sur la plaque ouverte que sur la plaque pleine d'un robinet-vanne à lunette.
